# EUROPÄISCHE PATENTSCHRIFT

(11) **EP 3 320 237 B1**
(45) Veröffentlichungstag und Bekanntmachung des Hinweises auf die Patenterteilung: **23.03.2022**
(21) Anmeldenummer: 16733876.3
(22) Anmeldetag: 11.06.2016
(51) Int. Cl.: F16H 63/30, F16H 57/08, F16H 3/66, F16D 23/04, F16D 23/06

(54) **GETRIEBEVORRICHTUNG**
TRANSMISSION DEVICE
TRANSMISSION

(30) Priorität: 08.07.2015 DE 102015008834
(43) Veröffentlichungstag der Anmeldung: 16.05.2018
(73) Patentinhaber: Daimler AG, 70372 Stuttgart (DE)
(72) Erfinder: TONIUS, Nils, 70176 Stuttgart (DE); SCHROEDER, Joachim, 70374 Stuttgart (DE)
(74) Vertreter: JENSEN & SON
(86) Internationale Anmeldenummer: PCT/EP2016/000970
(87) Internationale Veröffentlichungsnummer: WO 2017/005339

(56) Entgegenhaltungen:
- DE-A1-102011 108 024
- DE-A1-102013 011 566
- DE-A1-102013 205 578
- US-A1- 2011 155 530

## Beschreibung

Die Erfindung betrifft eine Getriebevorrichtung für ein Kraftfahrzeug.

Aus der DE 10 2011 108 024 A1 sowie aus der gattungsgemäßen DE 10 2013 205578 A1 sind bereits Getriebevorrichtungen für Kraftfahrzeuge, mit einer Kopplungseinheit, die eine Reibschlusseinheit und eine im Kraftfluss parallel zu der Reibschlusseinheit geschaltete Formschlusseinheit umfasst, mit einem Betätigungsaktor, der dazu vorgesehen ist, in einem ersten Betätigungszustand die Reibschlusseinheit zu betätigen und in einem zweiten Betätigungszustand zumindest die Formschlusseinheit zu betätigen, und mit einer Gegendruckeinheit, die dazu vorgesehen ist, eine dem Betätigungsaktor entgegen wirkende Gegenkraft bereitzustellen, bekannt.

Der Erfindung liegt insbesondere die Aufgabe zugrunde, die Getriebevorrichtung kostengünstig zu verbessern. Diese Aufgabe wird durch eine erfindungsgemäße Ausgestaltung entsprechend dem Anspruch 1 gelöst. Weiterbildungen der Erfindung ergeben sich aus den abhängigen Ansprüchen.

Die Erfindung geht aus von einer Getriebevorrichtung für ein Kraftfahrzeug, mit zumindest einer Kopplungseinheit, die eine Reibschlusseinheit und eine im Kraftfluss parallel zu der Reibschlusseinheit geschaltete Formschlusseinheit umfasst, mit einem Betätigungsaktor, der dazu vorgesehen ist, in einem ersten Betätigungszustand die Reibschlusseinheit zu betätigen und in einem zweiten Betätigungszustand zumindest die Formschlusseinheit zu betätigen, und mit einer Gegendruckeinheit, die dazu vorgesehen ist, in zumindest einem Betriebszustand eine dem Betätigungsaktor entgegen wirkende Gegenkraft bereitzustellen.

Es wird weiterhin davon ausgegangen, dass die Gegendruckeinheit dazu vorgesehen ist, die Gegenkraft während eines Betriebs zu verändern. Dadurch kann die Gegenkraft bedarfsgerecht angepasst werden, wodurch eine zur Einstellung des zweiten Betätigungszustands notwendige Betätigungskraft anhand der Gegenkraft flexibel geändert werden kann. Die Einstellung des ersten Betätigungszustands und des zweiten Betätigungszustands und damit ein Schließen der Reibschlusseinheit und der Formschlusseinheit kann flexibel gesteuert werden, wodurch die Reibschlusseinheit und die parallel geschaltete Formschlusseinheit flexibel durch einen einzigen Betätigungsaktor betätigt werden können. Durch die variable Gegenkraft kann eine maximale Übertragungsfähigkeit der Reibschlusseinheit während des Betriebs variabel eingestellt werden, wodurch die Reibschlusseinheit je nach Bedarf lediglich zur Vorsynchronisation der Formschlusseinheit oder zur vollständigen Übertragung eines Drehmoments genutzt werden kann. Ferner kann die Gegenkraft besonders genau und zuverlässig eingestellt sowie an einen Bauteilverschleiß und an einen Toleranzfehler angepasst werden, wodurch die Betätigung der Reibschlusseinheit und der Formschlusseinheit besonders genau und zuverlässig über eine besonders lange Lebensdauer gesteuert werden kann. Die Getriebevorrichtung kann kostengünstig, insbesondere hinsichtlich einer Genauigkeit, einer Zuverlässigkeit, einer Flexibilität und/oder einer Lebensdauer verbessert werden.

Unter einer "Kopplungseinheit" soll insbesondere sowohl eine Kupplungseinheit als auch eine Bremseinheit verstanden werden. Unter einer "Kupplungseinheit" soll insbesondere eine Einheit verstanden werden, die dazu vorgesehen ist, zwei drehbar angeordnete Kopplungselemente wahlweise drehfest zu verbinden oder zu trennen. Unter einer "Bremseinheit" soll insbesondere eine Einheit verstanden werden, die dazu vorgesehen ist, ein drehbares Kopplungselement mit einem feststehenden Kopplungselement, insbesondere einem gehäusefesten Kopplungselement, wahlweise drehfest zu verbinden oder diese voneinander zu trennen. Unter einer "Reibschlusseinheit" soll insbesondere eine Einheit verstanden werden, die die drehfeste Verbindung zumindest im Wesentlichen durch einen Reibschluss herstellt, wie beispielsweise eine Lamellenkupplung, eine Lamellenbremse, eine Konuskupplung oder eine Bandbremse. Unter einer "Formschlusseinheit" soll insbesondere eine Einheit verstanden werden, die die drehfeste Verbindung zumindest im Wesentlichen durch einen Formschluss herstellt, wie beispielsweise eine Klauenkupplung bzw. Klauenbremse. Die Reibschlusseinheit und die Formschlusseinheit sind vorzugsweise dazu vorgesehen, dieselben Kopplungselemente drehfest miteinander zu verbinden. Der Betätigungsaktor ist vorzugsweise dazu vorgesehen, zumindest eine Eingangsgröße, wie beispielsweise einen elektrischen Strom oder einen Druck, in zumindest eine Betätigungskraft umzuwandeln. Der Betätigungsaktor ist vorzugsweise hydraulisch oder pneumatisch ausgebildet. Der Betätigungsaktor ist vorzugsweise dazu vorgesehen, einen hydraulischen oder pneumatischen Druck in eine Betätigungskraft zur Betätigung der Reibschlusseinheit und der Formschlusseinheit umzuwandeln. Die Gegendruckeinheit ist vorzugsweise dazu vorgesehen, durch die Gegenkraft das Einstellen des zweiten Betätigungszustands, und damit vorteilhaft das Schließen der Formschlusseinheit, bis zu einer Betätigungskraftschwelle zu verhindern. Ferner ist die Gegendruckeinheit dazu vorgesehen, die Einstellung des ersten Betätigungszustands, und damit vorteilhaft das Schließen der Reibschlusseinheit, unterhalb der Betätigungskraftschwelle zu erlauben. Die Betätigungskraftschwelle ist abhängig von der durch die Gegendruckeinheit bereitgestellten Gegenkraft. Die Formschlusseinheit ist vorzugsweise dazu vorgesehen, erst zu schließen, wenn die von dem Betätigungsaktor bereitgestellte Betätigungskraft größer ist als die Gegenkraft. Die Reibschlusseinheit ist vorzugsweise dazu vorgesehen, bereits bei einer von dem Betätigungsaktor bereitgestellten Betätigungskraft kleiner als die Gegenkraft zumindest teilweise zu schließen. Unter einer "teilweise geschlossenen Reibschlusseinheit" soll insbesondere eine schlupfend betriebene Reibschlusseinheit verstanden werden. Vorzugsweise ist die Reibschlusseinheit dazu vorgesehen, die Formschlusseinheit zu synchronisieren, bevor die Formschlusseinheit geschlossen wird. Die Gegendruckeinheit ist vorzugsweise dazu vorgesehen, zumindest eine Eingangsgröße, wie beispielsweise einen elektrischen Strom oder einen Druck, in die Gegenkraft umzuwandeln. Die Betätigungskraft und die Gegenkraft sind vorzugsweise entgegen gerichtet zueinander orientiert. Unter "vorgesehen" soll insbesondere speziell ausgebildet, ausgelegt, ausgestattet und/oder angeordnet verstanden werden. Unter der Wendung "die Gegendruckeinheit ist dazu vorgesehen, die Gegenkraft während eines Betriebs zu verändern" soll insbesondere verstanden werden, dass die Gegendruckeinheit in der Art konstruktiv und/oder funktionell ausgebildet, ausgelegt, ausgestattet und/oder angeordnet ist, so dass die Gegenkraft während des Betriebs grundsätzlich verändert werden kann, unabhängig davon, ob während des Betriebs die Veränderung der Gegenkraft vorgesehen ist oder nicht und/oder ob während des Betriebs die Gegenkraft tatsächlich verändert wird oder nicht.

Erfindungsgemäß wird vorgeschlagen, dass die Gegendruckeinheit hydraulisch oder pneumatisch ausgebildet ist, wodurch die Gegenkraft besonders einfach durch einen hydraulischen oder pneumatischen Druck flexibel verändert werden kann. Die Gegendruckeinheit ist vorzugsweise dazu vorgesehen, einen hydraulischen oder pneumatischen Druck in die Gegenkraft umzuwandeln.

Ferner wird vorgeschlagen, dass die Reibschlusseinheit zumindest ein axial verschiebbares Reibelement aufweist und die Gegendruckeinheit zumindest einen Gegendruckkolben aufweist, der dazu vorgesehen ist, in zumindest einem Betriebszustand das zumindest eine Reibelement mit der Gegenkraft axial abzustützen. Dadurch kann eine maximale Verpressung eines Lamellenpakets der Reibschlusseinheit vor der Betätigung der Formschlusseinheit variabel eingestellt werden, wodurch die maximale Übertragungsfähigkeit der Reibschlusseinheit besonders einfach eingestellt werden kann. Vorzugsweise ist der Betätigungsaktor dazu vorgesehen, das Lamellenpaket gegen den Gegendruckkolben zu drücken. Der Betätigungsaktor betätigt die Formschlusseinheit vorzugsweise erst dann, wenn die durch den Betätigungsaktor bereitgestellte Betätigungskraft größer ist als die durch die Gegendruckeinheit bereitgestellte Gegenkraft. Der Begriff "axial" ist insbesondere auf eine Rotationsachse zumindest eines Reibelements der Reibschlusseinheit bezogen, so dass der Ausdruck "axial" insbesondere eine Richtung bezeichnet, die parallel oder koaxial zu der Rotationsachse verläuft. Unter einem "Reibelement" soll insbesondere ein Element zur Herstellung einer reibschlüssigen Verbindung verstanden werden, wie beispielsweise eine Kupplungslamelle, eine Reibscheibe oder ein Reibkonus.

Insbesondere ist es vorteilhaft, wenn die Formschlusseinheit ein axial verschiebbares Formschlusselement aufweist und die Gegendruckeinheit oder eine Rückstellfeder des Betätigungsaktors dazu vorgesehen ist, in Öffnungsrichtung auf das Formschlusselement einzuwirken. Dadurch kann die Formschlusseinheit einfach geöffnet werden und es kann auf zusätzliche Elemente zum Öffnen der Formschlusseinheit verzichtet werden, somit können Kosten, Bauraum und/oder Gewicht der Kopplungseinheit reduziert werden.

Weiter ist es vorteilhaft, wenn der Betätigungsaktor und die Gegendruckeinheit jeweils eine Druckfläche aufweisen, wobei die Druckfläche des Betätigungsaktors größer ausgeführt ist als die Druckfläche der Gegendruckeinheit. Dadurch kann der zweite Betätigungszustand durch einen besonders geringen hydraulischen oder pneumatischen Druck eingestellt und aufrechterhalten werden. Unter einer "Druckfläche" soll insbesondere eine Fläche verstanden werden, auf die der hydraulische oder pneumatische Druck zur Bereitstellung einer Kraft einwirkt. Die zwei Druckflächen sind vorzugsweise einander abgewandt.

Ferner ist es vorteilhaft, wenn die Getriebevorrichtung ein Betriebsmitteldrucksystem und die Gegendruckeinheit eine Druckkammer, die in zumindest einem Betriebszustand drucktechnisch an das Betriebsmitteldrucksystem angebunden ist, aufweist. Dadurch kann ein anderweitig benötigter Druck zumindest zur Steuerung der Gegendruckeinheit genutzt werden, wodurch Kosten, Bauraum und/oder Gewicht reduziert werden können. Unter einem "anderweitig benötigten Druck" soll insbesondere ein Betriebsmitteldruck verstanden werden, der auch bei fehlender Gegendruckeinheit benötigt wird, beispielsweise zur Betätigung zumindest einer Kopplungseinheit, um beispielsweise einen Getriebegang zu schalten.

Zudem ist es vorteilhaft, wenn die Druckkammer drucktechnisch permanent an das Betriebsmitteldrucksystem angebunden ist, wodurch auf ein Ventil zur Steuerung einer Anbindung der Druckkammer an das Betriebsmitteldrucksystem verzichtet und die Getriebevorrichtung konstruktiv besonders einfach ausgestaltet werden kann. Während des Betriebs herrscht in der Druckkammer vorzugsweise permanent ein Betriebsmitteldruck. Vorzugsweise stellt die Gegendruckeinheit während des Betriebs permanent die Gegenkraft bereit.

Besonders vorteilhaft ist es, wenn das Betriebsmitteldrucksystem als ein Arbeitsdrucksystem ausgebildet ist, wodurch ein besonders vorteilhafter Druck zur Bereitstellung der Gegenkraft genutzt werden kann. Vorzugsweise ist das Arbeitsdrucksystem zur Betriebsmittelversorgung von Kopplungseinheiten der Getriebevorrichtung vorgesehen, um diese zur Getriebegangschaltung zu Schließen oder zu Öffnen.

Weiter wird vorgeschlagen, dass die Reibschlusseinheit ein Auslegungsmoment aufweist, das kleiner ist als das Gesamtauslegungsmoment der Kopplungseinheit. Dadurch kann die Reibschlusseinheit besonders klein ausgelegt werden, wodurch Verlustleistungen, insbesondere Schleppleistungen der Getriebevorrichtung reduziert werden können. Unter einem "Auslegungsmoment" soll insbesondere ein mögliches, übertragbares Drehmoment verstanden werden, das von einer Einheit übertragen werden kann, ohne das die Einheit beschädigt oder zerstört wird. Vorzugsweise ist das Auslegungsmoment durch den Hersteller der jeweiligen Einheit vorgegeben. Vorteilhaft ist das Auslegungsmoment kleiner als ein Zerstörungsmoment der jeweiligen Einheit. Unter einem "Zerstörungsmoment" soll insbesondere ein Drehmoment verstanden werden, das zu einer Zerstörung oder einer Beschädigung der Einheit führt, wenn diese an der entsprechenden Einheit anliegt. Die jeweilige Kopplungseinheit, die Reibschlusseinheit und die Formschlusseinheit weisen vorzugsweise jeweils eine Sicherheitsreserve auf, die einer Differenz zwischen dem jeweiligen Zerstörungsmoment und dem jeweiligen Auslegungsmoment entspricht. Unter einem "Gesamtauslegungsmoment" soll insbesondere das Auslegungsmoment der gesamten Kopplungseinheit verstanden werden.

Des Weiteren wird vorgeschlagen, dass die Getriebevorrichtung einen Getrieberadsatz aufweist, der zur Einstellung von zumindest zwei Getriebegängen vorgesehen ist, wobei in zumindest einem der Getriebegänge zumindest die Formschlusseinheit geschlossen ist, und in zumindest einem anderen der Getriebegänge lediglich die Reibschlusseinheit geschlossen ist. Dadurch kann die Reibschlusseinheit in zumindest einem der Getriebegänge lediglich zur Synchronisierung der Formschlusseinheit und in zumindest einem der Getriebegänge zur vollständigen Übertragung eines Drehmoments genutzt werden. Alternativ ist es auch denkbar, dass die Reibschlusseinheit lediglich zur Synchronisation der Formschlusseinheit vorgesehen ist und die Formschlusseinheit in jedem Getriebegang, in dem die Kopplungseinheit ein Drehmoment überträgt, geschlossen ist.

Weitere Vorteile ergeben sich aus der folgenden Figurenbeschreibung. In den Figuren sind zwei Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: schematisch eine Getriebevorrichtung für ein Kraftfahrzeug, die eine kombinierte Kopplungseinheit mit einer Reibschlusseinheit und einer Formschlusseinheit, eine gemeinsame Betätigungseinheit zum Schließen der kombinierten Kopplungseinheit und eine Gegendruckeinheit zur Abstützung der Reibschlusseinheit aufweist,
- Fig. 2: ein Schaltschema der Getriebevorrichtung,
- Fig. 3: schematisch die kombinierte Kopplungseinheit, die gemeinsame Betätigungseinheit und die Gegendruckeinheit und
- Fig. 4: eine alternative Ausgestaltung einer Kopplungseinheit.

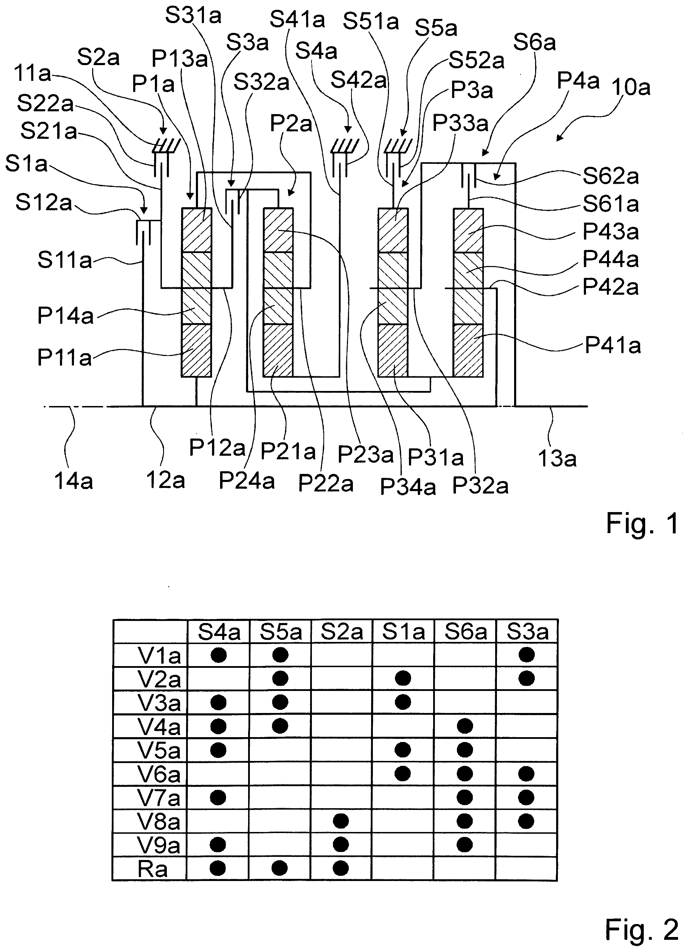

Figur 1 zeigt eine Getriebevorrichtung eines Kraftfahrzeugs, die einen Teil eines Kraftfahrzeugantriebsstrangs bildet. Die Getriebevorrichtung ist für ein Automatikgetriebe vorgesehen. Das die Getriebevorrichtung aufweisende Kraftfahrzeug weist einen nicht näher dargestellten Verbrennungsmotor zum Antrieb des Kraftfahrzeugs und nicht näher dargestellte Antriebsräder auf. Zur Einstellung von zumindest zehn Getriebegängen V1-V9, R weist die Getriebevorrichtung einen Getrieberadsatz 10a auf. Der Getrieberadsatz 10a ist in einem Kraftfluss zwischen dem Verbrennungsmotor und den Antriebsrädern angeordnet.

Der Getrieberadsatz 10a ist zur Bildung von neun Vorwärtsgetriebegänge V1-V9 und einem Rückwärtsgetriebegang R vorgesehen. Die Vorwärtsgetriebegänge V1-V9 weisen aufeinanderfolgende Übersetzungsverhältnisse auf. Dabei weist der erste Vorwärtsgetriebegang V1a das größte Übersetzungsverhältnis und der letzte, in diesem Ausführungsbeispiel der neunte Vorwärtsgetriebegang V9a, das kleinste Übersetzungsverhältnis auf, wobei die Übersetzungsverhältnisse vom niedrigen zum hohen Vorwärtsgetriebegang V1-V9 abnehmen. Der Rückwärtsgetriebegang R weist im Vergleich zu den Vorwärtsgetriebegängen V1-V9 eine Drehrichtungsumkehr auf. Der Getrieberadsatz 10a kann mit einem Hybridantriebsmodul verbunden werden, mittels dem ein Antriebsmoment verändert werden kann. Weiter kann mittels des Hybridantriebsmoduls und dem Getrieberadsatz 10a ein CVT realisiert werden, wodurch das Übersetzungsverhältnis zumindest in Teilbereichen stufenlos eingestellt werden kann. Die Getriebevorrichtung ist als eine Mehrstufengetriebevorrichtung ausgebildet.

Die Getriebevorrichtung weist weiter ein Getriebegehäuse 11a auf, das ortsfest angeordnet ist. Der Getrieberadsatz 10a ist innerhalb des Getriebegehäuses 11a angeordnet.

Zur Einleitung eines von dem Verbrennungsmotor bereitgestellten Antriebsmoments in den Getrieberadsatz 10a weist die Getriebevorrichtung eine Getriebeeingangswelle 12a auf. Die Getriebeeingangswelle 12a ist in einem von dem Verbrennungsmotor ausgehenden Kraftfluss nach dem Antriebsmotor und vor dem Getrieberadsatz 10a angeordnet. Der Getriebeeingangswelle 12a kann ein nicht näher dargestelltes Modul vorgeschaltet sein, das insbesondere eine Anfahrfunktionalität bereitstellt. Als ein vorgeschaltetes Modul ist beispielsweise ein Drehmomentwandler oder eine nasse Anfahrkupplung denkbar. Grundsätzlich kann das zum Anfahren vorgesehene Modul aber auch in den Getrieberadsatz 10a integriert sein.

Zur Ausleitung eines übersetzten Antriebsmoments weist die Getriebevorrichtung eine Getriebeausgangswelle 13a auf. Die Getriebeausgangswelle 13a ist in dem von dem Verbrennungsmotor ausgehenden Kraftfluss nach dem Getrieberadsatz 10a und vor den Antriebsrädern angeordnet. Der Getriebeausgangswelle 13a kann ein nicht näher dargestelltes Modul nachgeschaltet sein, mittels dem das aus dem Getrieberadsatz 10a ausgeleitete Antriebsmoment auf die Antriebsräder verteilt werden kann, wie beispielsweise ein Planetenradgetriebe, das für einen Drehzahlausgleich zwischen den Antriebsrädern vorgesehen ist, oder eine Allradantriebseinheit, die das Antriebsmoment auf zwei verschiedene Antriebsachsen verteilt. Die Getriebeeingangswelle 12a und die Getriebeausgangswelle 13a können grundsätzlich beliebig zueinander angeordnet sein.

Der Getrieberadsatz 10a weist vier Planetenradstufen P1a, P2a, P3a, P4a auf, die zur Schaltung der Getriebegänge V1-V9, R wirkungsmäßig miteinander verbunden sind. Die erste Planetenradstufe P1a, die zweite Planetenradstufe P2a, die dritte Planetenradstufe P3a und die vierte Planetenradstufe P4a sind hintereinander entlang einer Hauptrotationsachse 14a angeordnet. Eine Rotationsachse der Getriebeeingangswelle 12a fällt mit der Hauptrotationsachse 14a zusammen. Sämtliche Planetenradstufen P1a, P2a, P3a, P4a des Getrieberadsatzes 10a weisen einen Einfachplanetenradsatz auf. Die Bezeichnungen "erste", "zweite", "dritte" und "vierte" kennzeichnen eine axiale Reihenfolge der Planetenradstufen P1a, P2a, P3a, P4a ausgehend von dem Verbrennungsmotor. Demnach ist die erste Planetenradstufe P1a im Vergleich zu den anderen Planetenradstufen P2a, P3a, P4a an erster axialer Position, die zweite Planetenradstufe P2a im Vergleich zu den anderen Planetenradstufen P1a, P3a, P4a an zweiter axialer Position, die dritte Planetenradstufe P3a im Vergleich zu den anderen Planetenradstufen P1a, P2a, P4a an dritter axialer Position und die vierte Planetenradstufe P4a im Vergleich zu den anderen Planetenradstufen P1a, P2a, P3a an vierter axialer Position angeordnet.

Im Folgenden werden die vier Planetenradstufen P1a, P2a, P3a, P4a näher beschrieben. Die vier Planetenradstufen P1a, P2a, P3a, P4a weisen jeweils ein Sonnenrad, einen Planetenradträger und ein Hohlrad auf. Dabei sollen zur Vereinfachung unter einem "ersten bis vierten Planetenradträger", einem "ersten bis vierten Sonnenrad" und einem "ersten bis vierten Hohlrad" ein der ersten bis vierten Planetenradstufe P1a, P2a, P3a, P4a zugeordneter Planetenradträger bzw. ein Sonnenrad oder ein Hohlrad verstanden werden, d.h. beispielsweise, dass unter dem ersten Planetenradträger ein Planetenradträger der ersten Planetenradstufe P1a verstanden werden soll.

Die erste Planetenradstufe P1a ist eingangsseitig angeordnet. Die erste Planetenradstufe P1a umfasst ein erstes Sonnenrad P11a, ein erstes Hohlrad P13a und einen ersten Planetenradträger P12a. Der erste Planetenradträger P12a führt Planetenräder P14a der ersten Planetenradstufe P1a auf einer Kreisbahn. Die Planetenräder P14a kämmen mit dem ersten Sonnenrad P11a und mit dem ersten Hohlrad P13a. Die Planetenräder P14a sind drehbar auf dem ersten Planetenradträger P12a gelagert.

Die zweite Planetenradstufe P2a ist mittig eingangsseitig angeordnet. Die zweite Planetenradstufe P2a umfasst ein zweites Sonnenrad P21a, ein zweites Hohlrad P23a und einen zweiten Planetenradträger P22a. Der zweite Planetenradträger P22a führt Planetenräder P24a der zweiten Planetenradstufe P2a auf einer Kreisbahn. Die Planetenräder P24a kämmen mit dem zweiten Sonnenrad P21a und mit dem zweiten Hohlrad P23a. Die Planetenräder P24a sind drehbar auf dem zweiten Planetenradträger P22a gelagert.

Die dritte Planetenradstufe P3a ist mittig ausgangsseitig angeordnet. Die dritte Planetenradstufe P3a umfasst ein drittes Sonnenrad P31a, ein drittes Hohlrad P33a und einen dritten Planetenradträger P32a. Der dritte Planetenradträger P32a führt Planetenräder P34a der dritten Planetenradstufe P3a auf einer Kreisbahn. Die Planetenräder P34a kämmen mit dem dritten Sonnenrad P31a und mit dem dritten Hohlrad P33a. Die Planetenräder P34a sind drehbar auf dem dritten Planetenradträger P32a gelagert.

Die vierte Planetenradstufe P4a ist ausgangsseitig angeordnet. Die vierte Planetenradstufe P4a umfasst ein viertes Sonnenrad P41a, ein viertes Hohlrad P43a und einen vierten Planetenradträger P42a. Der vierte Planetenradträger P42a führt Planetenräder P44a der vierten Planetenradstufe P4a auf einer Kreisbahn. Die Planetenräder P44a kämmen mit dem vierten Sonnenrad P41a und mit dem vierten Hohlrad P43a. Die Planetenräder P44a sind drehbar auf dem vierten Planetenradträger P42a gelagert.

Das erste Hohlrad P13a ist permanent drehfest mit dem zweiten Planetenradträger P22a verbunden. Das zweite Hohlrad P23a ist permanent drehfest mit dem dritten Sonnenrad P31a und permanent drehfest mit dem vierten Sonnenrad P41a verbunden. Das dritte Sonnenrad P31a und das vierte Sonnenrad P41a sind permanent drehfest miteinander verbunden. Zur Einleitung des von dem Verbrennungsmotor bereitgestellten Antriebsmoments sind die erste Planetenradstufe P1a und die vierte Planetenradstufe P4a jeweils als eine Eingangsstufe ausgebildet. Zur Ausbildung der erste Planetenradstufe P1a als Eingangsstufe ist das erste Sonnenrad P11a permanent drehfest mit der Getriebeeingangswelle 12a verbunden. Zur Ausbildung der vierten Planetenradstufe P4a als Eingangsstufe ist der vierte Planetenradträger P42a permanent drehfest mit der Getriebeeingangswelle 12a verbunden. Zur Ausleitung des von dem Getrieberadsatz 10a übersetzten Antriebsmoments sind die dritte Planetenradstufe P3a und die vierte Planetenradstufe P4a jeweils als eine Ausgangsstufe ausgebildet. Zur Ausbildung der dritten Planetenradstufe P3a als Ausgangsstufe ist der dritte Planetenradträger P32a permanent drehfest mit der Getriebeausgangswelle 13a verbunden. Zur Ausbildung der vierten Planetenradstufe P4a als Ausgangsstufe ist das vierte Hohlrad P43a drehfest mit der Getriebeausgangswelle 13a verbindbar.

Zur Schaltung der Getriebegänge V1-V9, R weist die Getriebevorrichtung sechs Kopplungseinheiten S1a, S2a, S3a, S4a, S5a, S6a auf. Die Kopplungseinheiten S1a, S2a, S3a, S4a, S5a, S6a sind jeweils als eine Schalteinheit ausgebildet, die zur Schaltung der Getriebegänge V1-V9, R vorgesehen sind. Die Kopplungseinheiten S1a, S2a, S3a, S4a, S5a, S6a sind dazu vorgesehen, entweder wahlweise zwei drehbare Getriebeelemente drehfest miteinander zu verbinden und voneinander zu trennen oder wahlweise ein drehbares Getriebeelement drehfest mit dem Getriebegehäuse 11a zu verbinden oder von diesem zu trennen. Ein Getriebeelement ist dabei ein Sonnenrad P11a, P21a, P31a, P41a, ein Planetenradträger P12a, P22a, P32a, P42a oder ein Hohlrad P13a, P23a, P33a, P43a.

Die drei Kopplungseinheiten S1a, S3a, S6a sind jeweils als eine Kupplung ausgebildet. Sie weisen jeweils ein erstes drehbares Kopplungselement S11a, S31a, S61a und ein zweites drehbares Kopplungselement S12a, S32a, S62a auf. Die drei Kopplungseinheiten S1a, S3a, S6a sind jeweils dazu vorgesehen, ihre beiden drehbaren Kopplungselemente S11a, S12a, S31a, S32a, S61a, S62a drehfest miteinander zu verbinden.

Die drei Kopplungseinheiten S2a, S4a, S5a sind jeweils als eine Bremse ausgebildet. Sie weisen jeweils ein drehbares Kopplungselement S21a, S41a, S51a und ein feststehendes, gehäusefestes Kopplungselement S22a, S42a, S52a auf. Die Kopplungseinheiten S2a, S4a, S5a sind jeweils dazu vorgesehen, ihr drehbares Kopplungselement S21a, S41a, S51a und ihr feststehendes Kopplungselement S22a, S42a, S52a drehfest miteinander zu verbinden. Sie sind jeweils dazu vorgesehen, ihr drehbares Kopplungselement S21a, S41a, S51a gehäusefest und damit drehfest mit dem Getriebegehäuse 11a zu verbinden.

Die erste Kopplungseinheit S1a weist das erste drehbare Kopplungselement S11a und das zweite drehbare Kopplungselement S12a auf. Das erste drehbare Kopplungselement S11a der ersten Kopplungseinheit S1a ist permanent drehfest mit der Getriebeeingangswelle 12a verbunden. Das zweite drehbare Kopplungselement S12a der ersten Kopplungseinheit S1a ist permanent drehfest mit dem drehbaren Kopplungselement S21a der zweiten Kopplungseinheit S2a verbunden. Das zweite drehbare Kopplungselement S12a der ersten Kopplungseinheit S1a ist weiter permanent drehfest mit dem ersten Planetenradträger P12a verbunden. Die erste Kopplungseinheit S1a ist dazu vorgesehen, den ersten Planetenradträger P12a drehfest mit der Getriebeeingangswelle 12a zu verbinden. Die Kopplungseinheit S1a weist zur drehfesten Verbindung der drehbaren Kopplungselemente S11a, S12a lediglich eine Reibschlusseinheit auf. Die Kopplungseinheit S1a ist als eine Lamellenkupplung ausgebildet. Die Reibschlusseinheit umfasst zur drehfesten Verbindung der Kopplungselemente S11a, S12a ein Lamellenpaket.

Die zweite Kopplungseinheit S2a weist das drehbare Kopplungselement S21a und das feststehende Kopplungselement S22a auf. Das drehbare Kopplungselement S21a der zweiten Kopplungseinheit S2a ist permanent drehfest mit dem ersten Planetenradträger P12a verbunden. Ferner ist das drehbare Kopplungselement S21a der zweiten Kopplungseinheit S2a permanent drehfest mit dem ersten drehbaren Kopplungselement S31a der dritten Kopplungseinheit S3a verbunden. Das feststehende Kopplungselement S22a der zweiten Kopplungseinheit S2a ist permanent drehfest mit dem Getriebegehäuse 11a verbunden. Das feststehende Kopplungselement S22a der zweiten Kopplungseinheit S2a ist einstückig mit dem Getriebegehäuse 11a ausgebildet. Die Kopplungseinheit S2a ist dazu vorgesehen, ihr drehbares Kopplungselement S21a und ihr feststehendes Kopplungselement S22a drehfest miteinander zu verbinden. Die zweite Kopplungseinheit S2a ist dazu vorgesehen, den ersten Planetenradträger P12a gehäusefest zu verbinden. Die Kopplungseinheit S2a ist als eine Lamellenbremse ausgebildet. Sie weist lediglich eine Reibschlusseinheit auf, die zur drehfesten Verbindung der Kopplungselemente S21a, S22a ein Lamellenpaket umfasst.

Die dritte Kopplungseinheit S3a weist das erste drehbare Kopplungselement S31a und das zweite drehbare Kopplungselement S32a auf. Das erste drehbare Kopplungselement S31a der dritten Kopplungseinheit S3a ist permanent drehfest mit dem ersten Planetenradträger P12a verbunden. Das zweite drehbare Kopplungselement S32a der dritten Kopplungseinheit S3a ist permanent drehfest mit dem zweiten Hohlrad P23a verbunden. Das zweite drehbare Kopplungselement S32a der dritten Kopplungseinheit S3a ist weiter permanent drehfest mit dem dritten Sonnenrad P31a und permanent drehfest mit dem vierten Sonnenrad P41a verbunden. Die dritte Kopplungseinheit S3a ist dazu vorgesehen, den ersten Planetenradträger P12a, das zweite Hohlrad P23a, das dritte Sonnenrad P31a und das vierte Sonnenrad P41a drehfest miteinander zu verbinden. Die Kopplungseinheit S3a ist als eine Lamellenkupplung ausgebildet. Sie weist lediglich eine Reibschlusseinheit auf, die zur drehfesten Verbindung der Kopplungselemente S31a, S32a ein Lamellenpaket umfasst.

Die vierte Kopplungseinheit S4a weist das drehbare Kopplungselement S41a und das feststehende Kopplungselement S42a auf. Das drehbare Kopplungselement S41a der vierten Kopplungseinheit S4a ist permanent drehfest mit dem zweiten Sonnenrad P21a verbunden. Das feststehende Kopplungselement S42a der vierten Kopplungseinheit S4a ist permanent drehfest mit dem Getriebegehäuse 11a verbunden. Das feststehende Kopplungselement S42a der vierten Kopplungseinheit S4a ist einstückig mit dem Getriebegehäuse 11a ausgebildet. Die vierte Kopplungseinheit S4a ist dazu vorgesehen, das zweite Sonnenrad P21a gehäusefest zu verbinden. Die Kopplungseinheit S4a ist als eine Lamellenbremse ausgebildet. Sie weist lediglich eine Reibschlusseinheit auf, die zur drehfesten Verbindung der Kopplungselemente S41a, S42a ein Lamellenpaket umfasst.

Die fünfte Kopplungseinheit S5a weist das drehbare Kopplungselement S51a und das feststehende Kopplungselement S52a auf. Das drehbare Kopplungselement S51a der fünften Kopplungseinheit S5a ist permanent drehfest mit dem dritten Hohlrad P33a verbunden. Das feststehende Kopplungselement S52a der fünften Kopplungseinheit S5a ist permanent drehfest mit dem Getriebegehäuse 11a verbunden. Das feststehende Kopplungselement S52a der fünften Kopplungseinheit S5a ist einstückig mit dem Getriebegehäuse 11a ausgebildet. Die Kopplungseinheit S5a ist dazu vorgesehen, ihr drehbares Kopplungselement S51a und ihr feststehendes Kopplungselement S52a drehfest miteinander zu verbinden. Die fünfte Kopplungseinheit S5a ist dazu vorgesehen, das dritte Hohlrad P33a gehäusefest zu verbinden.

Die sechste Kopplungseinheit S6a weist das erste drehbare Kopplungselement S61a und das zweite drehbare Kopplungselement S62a auf. Das erste drehbare Kopplungselement S61a der sechsten Kopplungseinheit S6a ist permanent drehfest mit dem vierten Hohlrad P43a verbunden. Das zweite drehbare Kopplungselement S62a der sechsten Kopplungseinheit S6a ist permanent drehfest mit dem dritten Planetenradträger P32a verbunden. Das zweite drehbare Kopplungselement S62a der sechsten Kopplungseinheit S6a ist weiter permanent drehfest mit der Getriebeausgangswelle 13a verbunden. Die sechste Kopplungseinheit S6a ist dazu vorgesehen, das vierte Hohlrad P43a, den dritten Planetenradträger P32a und die Getriebeausgangswelle 13a drehfest miteinander zu verbinden. Die Kopplungseinheit S6a weist zur drehfesten Verbindung der drehbaren Kopplungselemente S61a, S62a lediglich eine Reibschlusseinheit auf. Die Kopplungseinheit S6a ist als eine Lamellenkupplung ausgebildet. Die Reibschlusseinheit umfasst zur drehfesten Verbindung der Kopplungselemente S61a, S62a ein Lamellenpaket.

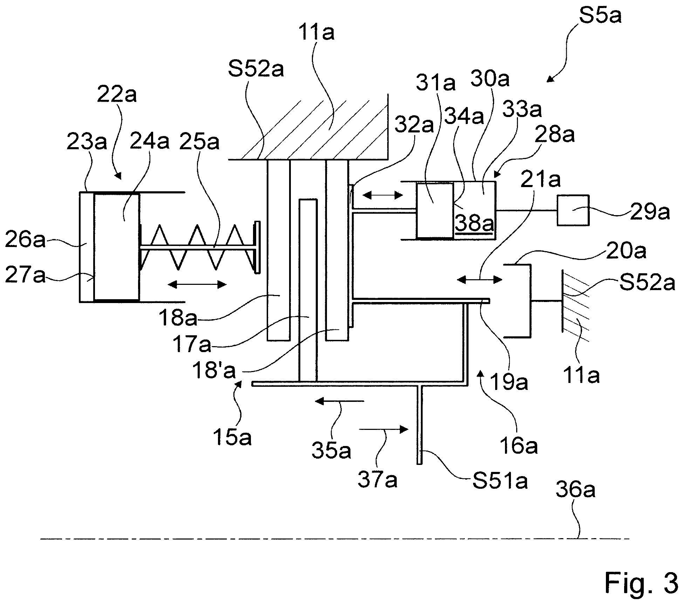

Die fünfte Kopplungseinheit S5a ist kombiniert ausgebildet (vgl. Fig. 3). Die fünfte Kopplungseinheit S5a weist eine Reibschlusseinheit 15a und eine im Kraftfluss parallel zur Reibschlusseinheit 15a geschaltete Formschlusseinheit 16a auf. Die Reibschlusseinheit 15a und die parallel geschaltete Formschlusseinheit 16a sind jeweils dazu vorgesehen, das drehbare Kopplungselement S51a der fünften Kopplungseinheit S5a gehäusefest und damit drehfest mit dem Getriebegehäuse 11a zu verbinden. Die fünfte Kopplungseinheit S5a ist der dritten Planetenradstufe P3a zugeordnet. Die Reibschlusseinheit 15a und die Formschlusseinheit 16a der fünften Kopplungseinheit S5a sind jeweils wirkungsmäßig zwischen dem drehbaren Kopplungselement S51a und dem Getriebegehäuse 11a angeordnet.

Die Reibschlusseinheit 15a der kombinierten Kopplungseinheit S5a ist als eine Lamellenbremse ausgebildet. Sie ist dazu vorgesehen, die Kopplungselemente S51a, S52a reibschlüssig miteinander zu verbinden. Die Reibschlusseinheit 15a umfasst zur drehfesten Verbindung der Kopplungselemente S51a, S52a ein Lamellenpaket. Die Reibschlusseinheit 15a umfasst erste Reibelemente 17a und zweite Reibelemente 18a, 18'a. Die ersten Reibelemente 17a sind permanent drehfest mit dem drehbaren Kopplungselement S51a der kombinierten Kopplungseinheit S5a verbunden. Die ersten Reibelemente 17a sind als Innenlamellen ausgebildet. Die ersten Reibelemente 17a weisen eine Rotationsachse 36a auf. Die Rotationsachse 36a ist parallel zu der Hauptrotationsachse 14a orientiert. Die zweiten Reibelemente 18a, 18'a sind permanent drehfest mit dem feststehenden Kopplungselement S52a verbunden. Sie sind permanent drehfest mit dem Getriebegehäuse 11a verbunden. Die zweiten Reibelemente 18a, 18'a sind axial relativ zu dem feststehenden Kopplungselement S52a verschiebbar angeordnet. Die zweiten Reibelemente 18a, 18'a sind als Außenlamellen ausgebildet. Ferner umfasst die Reibschlusseinheit 15a der kombinierten Kopplungseinheit S5a einen Außenlamellenträger, der permanent drehfest mit dem Getriebegehäuse 11a verbunden ist, und einen Innenlamellenträger, der permanent drehfest mit dem drehbaren Kopplungselement S51a verbunden ist. Der Übersicht halber sind in der Figur 3 lediglich ein erstes Reibelement 17a und zwei zweite Reibelemente 18a, 18'a dargestellt. Grundsätzlich kann die Reibschlusseinheit 15a eine beliebige Anzahl an ersten Reibelementen 17a und an zweiten Reibelementen 18a, 18'a aufweisen. Dem Fachmann sind unterschiedliche Ausgestaltungen für die Reibschlusseinheit 15a bekannt.

Das zweite Reibelement 18a ist als eine Anfangslamelle und das zweite Reibelement 18'a als eine Endlamelle ausgebildet. Das als Endlamelle ausgebildete zweite Reibelement 18'a ist zur axialen Abstützung der restlichen Reibelemente 17a, 18a vorgesehen. Das als Anfangslamelle ausgebildete zweite Reibelement 18a drückt bei Anliegen einer Betätigungskraft das erste Reibelement 17a gegen das als Endlamelle ausgebildete Reibelement 18'a. In einem zumindest teilweise geschlossenen Zustand der Reibschlusseinheit 15a drücken die Reibelemente 17a, 18a, 18'a gegeneinander, wodurch sich durch Reibung von Reibflächen der Reibelemente 17a, 18a, 18'a ein Kraftschluss bzw. Reibschluss bildet und ein anliegendes Drehmoment an dem dritten Hohlrad P33a übertragen bzw. abgestützt wird. Die Reibelemente 17a, 18a, 18'a sind jeweils axial verschiebbar angeordnet.

Die Formschlusseinheit 16a der kombinierten Kopplungseinheit S5a ist als eine Klauenbremse ausgebildet. Sie ist dazu vorgesehen, die Kopplungselemente S51a, S52a formschlüssig miteinander zu verbinden. Die Formschlusseinheit 16a umfasst ein erstes Formschlusselement 19a und ein zweites Formschlusselement 20a, die formschlüssig miteinander verbindbar sind. Das erste Formschlusselement 19a ist permanent drehfest mit dem drehbaren Kopplungselement S51a der kombinierten Kopplungseinheit S5a verbunden. Es ist permanent drehfest mit dem Innenlamellenträger der kombinierten Kopplungseinheit S5a verbunden. Das erste Reibelement 17a der Reibschlusseinheit 15a und das erste Formschlusselement 19a der Formschlusseinheit 16a sind permanent drehfest miteinander verbunden. Das zweite Formschlusselement 20a ist permanent drehfest mit dem feststehenden Kopplungselement S52a verbunden. Es ist permanent drehfest mit dem Getriebegehäuse 11a verbunden. Die Formschlusselemente 19a, 20a sind entlang einer axialen Betätigungsrichtung 21a relativ zueinander verschiebbar angeordnet. Das erste Formschlusselement 19a ist entlang der Betätigungsrichtung 21a relativ zum zweiten Formschlusselement 20a und relativ zum Getriebegehäuse 11a axial verschiebbar angeordnet. Das erste Formschlusselement 19a ist zum Schließen der Formschlusseinheit 16a in eine Schließrichtung 37a betätigbar oder verschiebbar und zum Öffnen der Formschlusseinheit 16a in eine Öffnungsrichtung 35a betätigbar oder verschiebbar. Die Öffnungsrichtung 35a zeigt in Richtung der Reibschlusseinheit 15a. Die Schließrichtung 37a zeigt von der Reibschlusseinheit 15a weg. Das drehbare Kopplungselement S51a und damit das erste Formschlusselement 19a sind drehfest, aber axial verschiebbar mit dem dritten Hohlrad P33a verbunden. Das zweite Formschlusselement 20a ist permanent drehfest und verschiebefest mit dem feststehenden Kopplungselement S52a und damit mit dem Getriebegehäuse 11a verbunden. Die Betätigungsrichtung 21a ist parallel zu der Hauptrotationsachse 14a orientiert. Sie ist parallel zur Rotationsachse 36a orientiert. Das erste Formschlusselement 19a und das zweite Formschlusselement 20a weisen zur formschlüssigen Verbindung jeweils eine Klauenverzahnung auf, die korrespondierend zueinander ausgebildet sind. Die Klauenverzahnungen sind jeweils als eine Stirnverzahnung ausgebildet. Die Klauenverzahnung kann als Radial- oder Axialklauenverzahnung ausgeführt sein. Die Klauenverzahnung kann grundsätzlich ohne Kopfschräge ausgebildet sein. Zudem kann die Klauenverzahnung zur Auflösung einer Zahn-auf-Zahn-Stellung grundsätzlich mit einer beidseitigen oder einseitigen Anspitzung ausgeführt sein. Ferner kann die Klauenverzahnung grundsätzlich axial und/oder radial angefederte Klauenzähne aufweisen.

Die Reibschlusseinheit 15a und die Formschlusseinheit 16a der kombinierten Kopplungseinheit S5a weisen jeweils ein Auslegungsmoment auf. Das Auslegungsmoment der Reibschlusseinheit 15a und das Auslegungsmoment der Formschlusseinheit 16a sind unterschiedlich. Das Auslegungsmoment der Reibschlusseinheit 15a ist kleiner als das Gesamtauslegungsmoment der kombinierten Kopplungseinheit S5a. Das Auslegungsmoment der Formschlusseinheit 16a entspricht dem Gesamtauslegungsmoment der kombinierten Kopplungseinheit S5a. Somit ist das Auslegungsmoment der Reibschlusseinheit 15a kleiner als das Auslegungsmoment der Formschlusseinheit 16a. Die Formschlusseinheit 16a ist im Vergleich zur Reibschlusseinheit 15a zur Übertragung von höheren Momenten ausgelegt.

Die Kopplungseinheiten S1a, S2a, S3a, S4a, S5a, S6a sind jeweils hydraulisch betätigbar. Zur Betätigung der Kopplungseinheiten S1a, S2a, S3a, S4a, S5a, S6a weist die Getriebevorrichtung ein Arbeitsdrucksystem auf. Das Arbeitsdrucksystem ist zur Betriebsmittelversorgung der Kopplungseinheiten S1a, S2a, S3a, S4a, S5a, S6a vorgesehen, um diese zur Getriebegangschaltung zu Schließen oder zu Öffnen.

Zur gemeinsamen Betätigung der Reibschlusseinheit 15a und der Formschlusseinheit 16a umfasst die Kopplungseinheit S5a einen gemeinsamen Betätigungsaktor 22a. Der Betätigungsaktor 22a kann eine Betätigungskraft lediglich in eine Richtung bereitstellen. Die durch den Betätigungsaktor 22a bereitgestellte Betätigungskraft ist zum Schließen der kombinierten Kopplungseinheit S5a vorgesehen. Der Betätigungsaktor 22a ist dazu vorgesehen, in einem ersten Betätigungszustand lediglich die Reibschlusseinheit 15a zu betätigen und in einem zweiten Betätigungszustand die Reibschlusseinheit 15a und die Formschlusseinheit 16a gleichzeitig zu betätigen. Der erste Betätigungszustand ist zur Synchronisierung der Formschlusseinheit 16a vorgesehen. In dem ersten Betätigungszustand ist lediglich die Reibschlusseinheit 15a zumindest teilweise geschlossen. In dem ersten Betätigungszustand stützt die kombinierte Kopplungseinheit S5a lediglich über die Reibschlusseinheit 15a das anliegende Drehmoment ab. In dem zweiten Betätigungszustand sind die Reibschlusseinheit 15a und die Formschlusseinheit 16a gleichzeitig geschlossen. In dem zweiten Betätigungszustand stützt die kombinierte Kopplungseinheit S5a über die Formschlusseinheit 16a das anliegende Drehmoment ab. In dem ersten Betätigungszustand stellt der Betätigungsaktor 22a eine erste Betätigungskraft und in dem zweiten Betätigungszustand stellt der Betätigungsaktor 22a eine zweite Betätigungskraft bereit. Die zweite Betätigungskraft ist größer als die erste Betätigungskraft. Die erste Betätigungskraft und die zweite Betätigungskraft sind gleichgerichtet. Die Betätigungskräfte sind parallel zur Rotationsachse 36a gerichtet.

Die von dem Betätigungsaktor 22a bereitgestellte Betätigungskraft greift an dem als Anfangslamelle ausgebildeten zweiten Reibelement 18a an. Das als Endlamelle ausgebildete zweite Reibelement 18'a ist dazu vorgesehen, die durch den Betätigungsaktor 22a bereitgestellte Betätigungskraft auf das erste Formschlusselement 19a zu übertragen. Das erste Formschlusselement 19a ist in die Betätigungsrichtung 21a bewegungstechnisch an das als Endlamelle ausgebildete Reibelement 18'a angebunden. Das erste Formschlusselement 19a liegt axial an dem als Endlamelle ausgebildeten Reibelement 18'a an. Der Betätigungsaktor 22a ist dazu vorgesehen, die Formschlusseinheit 16a über die Reibschlusseinheit 15a zu betätigen. Die Formschlusseinheit 16a ist durch eine axiale Verschiebung des als Endlamelle ausgebildeten zweiten Reibelements 18'a betätigbar. Die Reibschlusseinheit 15a und die Formschlusseinheit 16a werden nacheinander betätigt, wobei die Reibschlusseinheit 15a vor der Formschlusseinheit 16a greift. Die Formschlusseinheit 16a wird stets bei geschlossener Reibschlusseinheit 15a geschlossen.

Der Betätigungsaktor 22a ist hydraulisch ausgebildet. Der Betätigungsaktor 22a stellt eine hydraulische Betätigungskraft bereit. Der Betätigungsaktor 22a betätigt druckgesteuert die Reibschlusseinheit 15a und die Formschlusseinheit 16a der kombinierten Kopplungseinheit S5a. Der Betätigungsaktor 22a ist innerhalb des Getriebegehäuses 11a angeordnet. Der Betätigungsaktor 22a ist als eine Zylinder-Kolben-Einheit ausgebildet. Er weist einen Betätigungszylinder 23a, ein Betätigungskolben 24a und ein Betätigungselement 25a auf. Der Betätigungskolben 24a ist axial verschiebbar in dem Betätigungszylinder 23a angeordnet. Der Betätigungskolben 24a ist fest mit dem Betätigungselement 25a verbunden. Sie sind einstückig miteinander ausgeführt. Zum Schließen der kombinierten Kopplungseinheit S5a drückt der Betätigungskolben 24a mit der Betätigungskraft axial gegen das als Anfangslamelle ausgebildete zweite Reibelement 18a. Der Betätigungskolben 24a kann grundsätzlich einstückig mit dem als Anfangslamelle ausgebildeten zweiten Reibelement 18a oder separat von dem als Anfangslamelle ausgebildeten zweiten Reibelement 18a ausgebildet sein.

Zur Bereitstellung der Betätigungskraft weist der Betätigungsaktor 22a eine Druckkammer 26a auf. Die Druckkammer 26a ist zum Schließen der kombinierten Kopplungseinheit S5a vorgesehen. Der Betätigungskolben 24a begrenzt die Druckkammer 26a. Zur Bereitstellung der Betätigungskraft ist in der Druckkammer 26a ein Betriebsmitteldruck aufbaubar. Der Betätigungsaktor 22a weist ferner eine Druckfläche 27a auf, auf die der in der Druckkammer 26a herrschende Betriebsmitteldruck wirkt. Die Druckfläche 27a und der Betriebsmitteldruck in der Druckkammer 26a sind gemeinsam zur Einstellung der Betätigungskraft vorgesehen. Der Betätigungskolben 24a bildet die Druckfläche 27a des Betätigungsaktors 22a aus.

Zur Bereitstellung der zwei Betätigungszustände weist die Getriebevorrichtung eine Gegendruckeinheit 28a auf, die dazu vorgesehen ist, eine dem Betätigungsaktor 22a entgegen wirkende Gegenkraft bereitzustellen. Die Gegendruckeinheit 28a ist dazu vorgesehen, mit der Gegenkraft der Betätigungskraft entgegen zu wirken. Die Gegendruckeinheit 28a stellt eine Betätigungskraftschwelle ein. Bei Betätigungskräften unterhalb der Betätigungskraftschwelle ist die Formschlusseinheit 16a geöffnet und bei Betätigungskräften oberhalb der Betätigungskraftschwelle ist die Formschlusseinheit 16a geschlossen. Das als Endlamelle ausgebildete Reibelement 18'a stützt sich axial an der Gegendruckeinheit 28a ab.

Die Gegendruckeinheit 28a ist dazu vorgesehen, eine Gegenkraft bereitzustellen, die größer ist als die erste Betätigungskraft und kleiner ist als die zweite Betätigungskraft. Die Formschlusseinheit 16a schließt erst dann, wenn die durch den Betätigungsaktor 22a bereitgestellte Betätigungskraft die durch die Gegendruckeinheit 28a bereitgestellte Gegenkraft übersteigt. Die Gegenkraft stellt die Betätigungskraftschwelle ein. Die Gegendruckeinheit 28a kann die Gegenkraft lediglich in eine Richtung bereitstellen. Die durch die Gegendruckeinheit 28a bereitgestellte Gegenkraft ist zum Öffnen der Formschlusseinheit 16a vorgesehen. Die Gegenkraft ist parallel zur Rotationsachse 36a orientiert. Die Betätigungskraft und die Gegenkraft sind einander entgegen gerichtet. Die Gegendruckeinheit 28a ist entlang der Betätigungskraft betrachtet nach der Reibschlusseinheit 15a angeordnet. Die Gegendruckeinheit 28a stützt axial das als Endlamelle ausgebildete zweite Reibelement 18'a ab. Die Gegenkraft greift an dem als Endlamelle ausgebildeten zweiten Reibelement 18'a an.

Die Gegendruckeinheit 28a ist dazu vorgesehen, die Gegenkraft während eines Betriebs der Getriebevorrichtung zu verändern. Sie weist ein Einstellmittel 38a auf, das dazu vorgesehen ist, die Gegenkraft während des Betriebs zu verändern, wodurch die zum Schließen der Formschlusseinheit 16a notwendige Betätigungskraft und damit die Betätigungskraftschwelle während des Betriebs veränderbar ist. Die Gegendruckeinheit 28a ist hydraulisch ausgebildet. Die Gegendruckeinheit 28a stützt das als Endlamelle ausgebildete zweite Reibelement 18'a hydraulisch ab. Das Einstellmittel 38a ist als ein hydraulischer Betriebsmitteldruck ausgebildet. Die Gegendruckeinheit 28a stellt eine hydraulische Gegenkraft bereit.

Die Gegendruckeinheit 28a ist innerhalb des Getriebegehäuses 11a angeordnet. Die Gegendruckeinheit 28a ist als eine Zylinder-Kolben-Einheit ausgebildet. Sie weist einen Gegendruckzylinder 30a, einen Gegendruckkolben 31a und ein Betätigungselement 32a auf. Der Gegendruckkolben 31a ist axial verschiebbar in dem Gegendruckzylinder 30a angeordnet. Der Gegendruckkolben 31a ist fest mit dem Betätigungselement 32a verbunden. Sie sind einstückig miteinander ausgeführt. Der Gegendruckkolben 31a ist dazu vorgesehen, das als Endlamelle ausgebildete Reibelement 18'a mit der Gegenkraft axial abzustützen. Der Gegendruckkolben 31a drückt mit der Gegenkraft axial gegen das als Endlamelle ausgebildete zweite Reibelement 18'a. Zum Öffnen der Formschlusseinheit 16a ist der Gegendruckkolben 31a dazu vorgesehen, mit der Gegenkraft in Öffnungsrichtung 35a auf das erste Formschlusselement 19a einzuwirken. Die Gegenkraft ist dazu vorgesehen, das erste Formschlusselement 19a in die Öffnungsrichtung 35a axial zu verschieben. Der Gegendruckkolben 31a kann grundsätzlich einstückig mit dem als Endlamelle ausgebildeten zweiten Reibelement 18'a oder separat von dem als Endlamelle ausgebildeten zweiten Reibelement 18'a ausgebildet sein.

Zur Bereitstellung der Gegenkraft weist die Gegendruckeinheit 28a eine Druckkammer 33a auf. Die Druckkammer 33a ist zum Öffnen der Formschlusseinheit 16a vorgesehen. Der Gegendruckkolben 31a begrenzt die Druckkammer 33a. Zur Bereitstellung der Gegenkraft ist in der Druckkammer 33a ein Betriebsmitteldruck aufbaubar. Während des Betriebs herrscht in der Druckkammer 33a permanent ein Betriebsmitteldruck. Das Einstellmittel 38a ist als der in der Druckkammer 33a herrschende Betriebsmitteldruck ausgebildet. Die Gegendruckeinheit 28a stellt während des Betriebs eine Gegenkraft bereit.

Die Gegendruckeinheit 28a weist ferner eine Druckfläche 34a auf, auf die der in der Druckkammer 33a herrschende Betriebsmitteldruck wirkt. Die Druckfläche 34a und der Betriebsmitteldruck in der Druckkammer 33a sind gemeinsam zur Einstellung der Gegenkraft vorgesehen. Der Gegendruckkolben 31a bildet die Druckfläche 34a der Gegendruckeinheit 28a aus. Die Druckfläche 27a des Betätigungsaktors 22a und die Druckfläche 34a der Gegendruckeinheit 28a sind einander abgewandt. Die Druckfläche 27a des Betätigungsaktors 22a ist im Vergleich zu der Druckfläche 34a der Gegendruckeinheit 28a größer ausgeführt.

Die Druckkammer 33a der Gegendruckeinheit 28a ist drucktechnisch an ein Betriebsmitteldrucksystem 29a der Getriebevorrichtung angebunden. Sie ist drucktechnisch permanent an das Betriebsmitteldrucksystem 29a angebunden. Das Betriebsmitteldrucksystem 29a ist als das Arbeitsdrucksystem ausgebildet. In der Druckkammer 33a herrscht während des Betriebs permanent der Arbeitsdruck. Das Einstellmittel 38a ist als der Arbeitsdruck ausgebildet. Die Gegenkraft resultiert aus dem Arbeitsdruck. Die Gegenkraft ist durch eine Veränderung des Arbeitsdrucks veränderbar. Alternativ ist es auch denkbar, dass die Druckkammer 33a der Gegendruckeinheit 28a drucktechnisch an eine andere Komponente, wie beispielsweise an einen Betätigungsaktor einer der weiteren Kopplungseinheiten S1a, S2a, S3a, S4a, S6a, angebunden ist.

In der Figur 2 ist ein Schaltschema der Getriebevorrichtung dargestellt. In dem Schaltschema stellt ein "●" eine geschlossene und ein "fehlendes ●" eine geöffnete Kopplungseinheit S1a, S2a, S3a, S4a, S5a, S6a in dem entsprechenden Getriebegang V1-V9, R dar. Die Bildung der Vorwärtsgetriebegänge V1-V9 und des Rückwärtsgetriebegangs R durch Schließen der Kopplungseinheiten S1-S6 ist in dem Schaltschema in der Figur 2 dargestellt. Einem Fachmann ergibt sich aus dem Schaltschema in der Figur 2 in Verbindung mit dem Getriebeschema in der Figur 1 für jeden Getriebegang ein Leistungsfluss.

Die Kopplungseinheit S1a ist in dem zweiten Vorwärtsgetriebegang V2a, in dem dritten Vorwärtsgetriebegang V3a, in dem fünften Vorwärtsgetriebegang V5a und in dem sechsten Vorwärtsgetriebegang V6a geschlossen. Die Kopplungseinheit S2a ist in dem achten Vorwärtsgetriebegang V8a, in dem neunten Vorwärtsgetriebegang V9a und in dem Rückwärtsgetriebegang R geschlossen. Die Kopplungseinheit S3a ist in dem ersten Vorwärtsgetriebegang V1a, in dem zweiten Vorwärtsgetriebegang V2a, in dem sechsten Vorwärtsgetriebegang V6a, in dem siebten Vorwärtsgetriebegang V7a und in dem achten Vorwärtsgetriebegang V8a geschlossen. Die Kopplungseinheit S4a ist in dem ersten Vorwärtsgetriebegang V1a, in dem dritten Vorwärtsgetriebegang V3a, in dem vierten Vorwärtsgetriebegang V4a, in dem fünften Vorwärtsgetriebegang V5a, in dem siebten Vorwärtsgetriebegang V7a, in dem neunten Vorwärtsgetriebegang V9a und in dem Rückwärtsgetriebegang R geschlossen. Die Kopplungseinheit S5a ist in dem ersten Vorwärtsgetriebegang V1a, in dem zweiten Vorwärtsgetriebegang V2a, in dem dritten Vorwärtsgetriebegang V3a, in dem vierten Vorwärtsgetriebegang V4a und in dem Rückwärtsgetriebegang R geschlossen. Die Kopplungseinheit S6a ist in dem vierten Vorwärtsgetriebegang V4a, in dem fünften Vorwärtsgetriebegang V5a, in dem sechsten Vorwärtsgetriebegang V6a, in dem siebten Vorwärtsgetriebegang V7a, in dem achten Vorwärtsgetriebegang V8a und in dem neunten Vorwärtsgetriebegang V9a geschlossen.

Die Reibschlusseinheit 15a ist in dem dargestellten Ausführungsbeispiel auf eine Drehmomentkapazität des vierten Vorwärtsgetriebegangs V4a ausgelegt. In den Vorwärtsgetriebegängen V1a, V2a, V3a und dem Rückwärtsgetriebegang R sind die Reibschlusseinheit 15a und die Formschlusseinheit 16a geschlossen. In dem ersten Vorwärtsgetriebegang V1a, dem zweiten Vorwärtsgetriebegang V2a, dem dritten Vorwärtsgetriebegang V3a und dem Rückwärtsgetriebegang R überträgt bzw. stützt die Formschlusseinheit 16a das an dem dritten Hohlrad P33a anliegende Drehmoment. In dem Vorwärtsgetriebegang V4a ist die Reibschlusseinheit 15a geschlossen und die Formschlusseinheit 16a geöffnet. In dem vierten Vorwärtsgetriebegang V4a überträgt bzw. stützt die Reibschlusseinheit 15a das an dem dritten Hohlrad P33a anliegende Drehmoment. Alternativ kann die Reibschlusseinheit 15a auch lediglich für eine Vorsynchronisierung der Formschlusseinheit 16a vorgesehen sein. In einer solchen Ausgestaltung ist die Formschlusseinheit 16a in dem Vorwärtsgetriebegang V4a ebenfalls geschlossen.

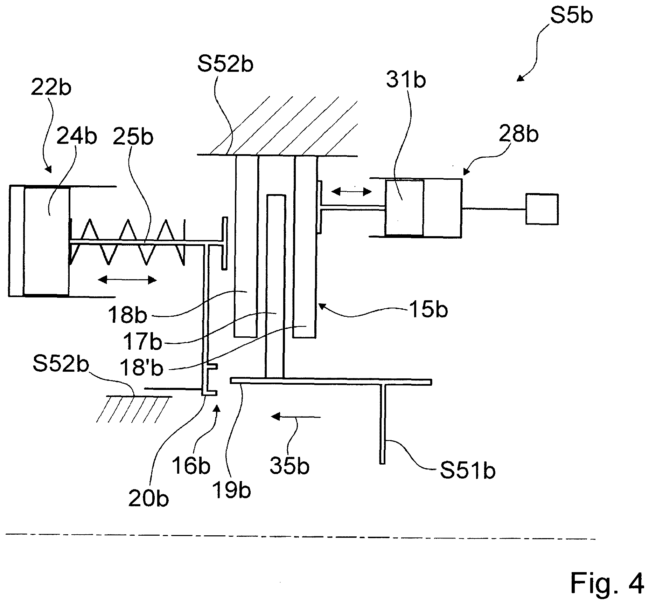

In Figur 4 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 3 verwiesen werden kann. Zur Unterscheidung der Ausführungsbeispiele ist der Buchstabe a in den Bezugszeichen des Ausführungsbeispiels in den Figuren 1 bis 3 durch den Buchstaben b in den Bezugszeichen des Ausführungsbeispiels der Figur 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 3 verwiesen werden.

Die Figur 4 zeigt eine Getriebevorrichtung für ein Kraftfahrzeug mit einer Kopplungseinheit S5b. Die Kopplungseinheit S5b umfasst zwei Kopplungselemente S51b, S52b sowie eine Reibschlusseinheit 15b und eine im Kraftfluss parallel zu der Reibschlusseinheit 15b geschaltete Formschlusseinheit 16b, die dazu vorgesehen sind, die Kopplungselemente S51b, S52b drehfest miteinander zu verbinden. Die Kopplungseinheit S5b umfasst weiter einen Betätigungsaktor 22b, der dazu vorgesehen ist, in einem ersten Betätigungszustand die Reibschlusseinheit 15b zu betätigen und in einem zweiten Betätigungszustand zumindest die Formschlusseinheit 16b zu betätigen. Zudem umfasst die Kopplungseinheit S5b eine Gegendruckeinheit 28b, die dazu vorgesehen ist, in zumindest einem Betriebszustand eine dem Betätigungsaktor 22b entgegen wirkende Gegenkraft bereitzustellen. Die Gegendruckeinheit 28b ist dazu vorgesehen, die Gegenkraft während eines Betriebs zu verändern.

Die Gegendruckeinheit 28b ist hydraulisch ausgebildet. Die Reibschlusseinheit 15b weist zumindest zwei axial verschiebbare Reibelemente 17b, 18b, 18'b auf, wobei das eine Reibelement 17b drehfest mit dem ersten Kopplungselement S51b und das zweite Reibelement 18b drehfest mit dem zweiten Kopplungselement S52b verbunden ist. Die Gegendruckeinheit 28b weist einen Gegendruckkolben 31b auf, der dazu vorgesehen ist, in zumindest einem Betriebszustand das zumindest eine Reibelement 17b, 18b, 18'b mit der Gegenkraft axial abzustützen.

Die Formschlusseinheit 16b weist zwei Formschlusselemente 19b, 20b auf. Das eine Formschlusselement 19b ist drehfest mit dem ersten Kopplungselement S51b verbunden, das zweite Formschlusselement 20b ist drehfest mit dem zweiten Kopplungselement S52b verbunden. Zumindest eines der Formschlusselemente 19b, 20b ist axial verschiebbar. Zur Betätigung der Formschlusseinheit 16b und der Reibschlusseinheit 15b ist der Betätigungsakttor 22b dazu vorgesehen, zumindest eines der Reibelemente 17b, 18b, 18'b mit einer in axialer Richtung wirkenden Kraft zu beaufschlagen, durch welche die Reibelemente 17b, 18b, 18'b gegeneinander gedrückt werden. Zudem ist der Betätigungsaktor 22b dazu vorgesehen, das axial verschiebbare Formschlusselement 20b in Eingriff mit dem axial feststehenden Formschlusselement 19b zu bringen.

Der Betätigungsaktor 22b umfasst ein Betätigungselement 25b, das zur Betätigung der Formschlusseinheit 16b und der Reibschlusseinheit 15b vorgesehen ist. Der Betätigungsaktor 22b umfasst einen axial verschiebbaren Betätigungskolben 24b, mit dem das Betätigungselement 25b gekoppelt ist. Die Reibschlusseinheit 15b und die Formschlusseinheit 16b weisen unterschiedliche Betätigungswege auf. Der Betätigungsweg der Reibschlusseinheit 15b ist kleiner als der Betätigungsweg der Formschlusseinheit 16b, so dass bei einem Schließen der Kopplungseinheit S5b zunächst die Reibschlusseinheit 15b geschlossen wird, bevor die Formschlusseinheit 16b geschlossen wird.

Das axial verschiebbare Formschlusselement 20b ist mit dem Betätigungselement 25b des Betätigungsaktors 22b gekoppelt. Insbesondere können das Betätigungselement 25b und das Formschlusselement 20b der Formschlusseinheit 16b auch einstückig ausgebildet sein. Eine Bewegung des Betätigungselement 25b wird unverändert in eine Bewegung des Formschlusselements 20b umgesetzt.

Der Betätigungsaktor 22b ist dazu vorgesehen, in Öffnungsrichtung 35b auf das zumindest eine Formschlusselement 20b und das eine Reibelement 18b einzuwirken. Der Betätigungsaktor 22b umfasst eine Rückstellfeder, die dazu vorgesehen ist, das Betätigungselement 25b nach einer Betätigung der Reibschlusseinheit 15b und der Formschlusseinheit 16b wieder in eine Ruhestellung zu bewegen. Indem das Formschlusselement 20b mit dem Betätigungselement 25b gekoppelt ist, wird gleichzeitig die Formschlusseinheit 16b und die Reibschlusseinheit 15b geöffnet.

Indem der Betätigungsaktor 22b direkt auf die Formschlusseinheit 16b wirkt, kann eine bei einer Betätigung auf das Formschlusselement 20b wirkende Kraft über den Betätigungsaktor 22b eingestellt werden, während eine auf das zumindest eine Reibelement 17b, 18b, 18'b wirkende Kraft durch die Gegendruckeinheit 28b begrenzt wird. Insbesondere Zahn-auf-Zahnstellungen in der Formschlusseinheit 16b können dadurch aufgelöst werden. In einer Ansteuerung der Kopplungseinheit S5b ist lediglich ein Regelventil für den Betätigungsaktor 22b vorgesehen. Die Gegendruckeinheit 28b kann grundsätzlich ohne eigenes Regelventil ausgeführt werden.

### Bezugszeichenliste

- 10: Getrieberadsatz
- 11: Getriebegehäuse
- 12: Getriebeeingangswelle
- 13: Getriebeausgangswelle
- 14: Hauptrotationsachse
- 15: Reibschlusseinheit
- 16: Formschlusseinheit
- 17: Reibelement
- 18: Reibelement
- 18': Reibelement
- 19: Formschlusselement
- 20: Formschlusselement
- 21: Betätigungsrichtung
- 22: Betätigungsaktor
- 23: Betätigungszylinder
- 24: Betätigungskolben
- 25: Betätigungselement
- 26: Druckkammer
- 27: Druckfläche
- 28: Gegendruckeinheit
- 29: Betriebsmitteldrucksystem
- 30: Gegendruckzylinder
- 31: Gegendruckkolben
- 32: Betätigungselement
- 33: Druckkammer
- 34: Druckfläche
- 35: Öffnungsrichtung
- 36: Rotationsachse
- 37: Schließrichtung
- 38: Einstellmittel
- P1: Planetenradstufe
- P2: Planetenradstufe
- P3: Planetenradstufe
- P4: Planetenradstufe
- P11: Sonnenrad
- P12: Planetenradträger
- P13: Hohlrad
- P14: Planetenrad
- P21: Sonnenrad
- P22: Planetenradträger
- P23: Hohlrad
- P24: Planetenrad
- P31: Sonnenrad
- P32: Planetenradträger
- P33: Hohlrad
- P34: Planetenrad
- P41: Sonnenrad
- P42: Planetenradträger
- P43: Hohlrad
- P44: Planetenrad
- S1: Kopplungseinheit
- S2: Kopplungseinheit
- S3: Kopplungseinheit
- S4: Kopplungseinheit
- S5: Kopplungseinheit
- S6: Kopplungseinheit
- S11: Kopplungselement
- S12: Kopplungselement
- S21: Kopplungselement
- S22: Kopplungselement
- S31: Kopplungselement
- S32: Kopplungselement
- S41: Kopplungselement
- S42: Kopplungselement
- S51: Kopplungselement
- S52: Kopplungselement
- S61: Kopplungselement
- S62: Kopplungselement
- V1: Vorwärtsgetriebegang
- V2: Vorwärtsgetriebegang
- V3: Vorwärtsgetriebegang
- V4: Vorwärtsgetriebegang
- V5: Vorwärtsgetriebegang
- V6: Vorwärtsgetriebegang
- V7: Vorwärtsgetriebegang
- V8: Vorwärtsgetriebegang
- V9: Vorwärtsgetriebegang
- R: Rückwärtsgetriebegang

## Patentansprüche

1. Getriebevorrichtung für ein Kraftfahrzeug, mit zumindest einer Kopplungseinheit (S5a), die eine Reibschlusseinheit (15a) und eine im Kraftfluss parallel zu der Reibschlusseinheit (15a) geschaltete Formschlusseinheit (16a) umfasst, mit einem Betätigungsaktor (22a), der dazu vorgesehen ist, in einem ersten Betätigungszustand die Reibschlusseinheit (15a) zu betätigen und in einem zweiten Betätigungszustand zumindest die Formschlusseinheit (16a) zu betätigen, und mit einer Gegendruckeinheit (28a), die dazu vorgesehen ist, in zumindest einem Betriebszustand eine dem Betätigungsaktor (22a) entgegen wirkende Gegenkraft bereitzustellen,
wobei die Gegendruckeinheit (28a) dazu vorgesehen ist, die Gegenkraft während eines Betriebs zu verändern,
**dadurch gekennzeichnet, dass**
die Gegendruckeinheit (28a) hydraulisch oder pneumatisch ausgebildet ist.

2. Getriebevorrichtung nach Anspruch 1,
**dadurch gekennzeichnet, dass**
die Reibschlusseinheit (15a) zumindest ein axial verschiebbares Reibelement (18'a) aufweist und die Gegendruckeinheit (28a) zumindest einen Gegendruckkolben (31a) aufweist, der dazu vorgesehen ist, in zumindest einem Betriebszustand das zumindest eine Reibelement (18'a) mit der Gegenkraft axial abzustützen.

3. Getriebevorrichtung nach einem der vorhergehenden Ansprüche,
**dadurch gekennzeichnet, dass**
die Formschlusseinheit (16a; 16b) ein axial verschiebbares Formschlusselement (19a; 20b) aufweist und die Gegendruckeinheit (28a) oder eine Rückstellfeder des Betätigungsaktors (22b) dazu vorgesehen ist, in Öffnungsrichtung (35a; 35b) auf das Formschlusselement (19a; 20b) einzuwirken.

4. Getriebevorrichtung nach einem der vorhergehenden Ansprüche,
**dadurch gekennzeichnet, dass**
der Betätigungsaktor (22a) und die Gegendruckeinheit (28a) jeweils eine Druckfläche (27a, 34a) aufweisen, wobei die Druckfläche (27a) des Betätigungsaktors (22a) größer ausgeführt ist als die Druckfläche (34a) der Gegendruckeinheit (28a).

5. Getriebevorrichtung nach einem der vorhergehenden Ansprüche,
**gekennzeichnet durch**
ein Betriebsmitteldrucksystem (29a), wobei die Gegendruckeinheit (28a) eine Druckkammer (33a) aufweist, die in zumindest einem Betriebszustand drucktechnisch an das Betriebsmitteldrucksystem (29a) angebunden ist.

6. Getriebevorrichtung nach Anspruch 5,
**dadurch gekennzeichnet, dass**
die Druckkammer (33a) drucktechnisch permanent an das Betriebsmitteldrucksystem (29a) angebunden ist.

7. Getriebevorrichtung nach Anspruch 5 oder 6,
**dadurch gekennzeichnet, dass**
das Betriebsmitteldrucksystem (29a) als ein Arbeitsdrucksystem ausgebildet ist.

8. Getriebevorrichtung nach einem der vorhergehenden Ansprüche,
**dadurch gekennzeichnet, dass**
die Reibschlusseinheit (15a) ein Auslegungsmoment aufweist, das kleiner ist als ein Gesamtauslegungsmoment der Kopplungseinheit (S5a).

9. Getriebevorrichtung nach einem der vorhergehenden Ansprüche,
**gekennzeichnet durch**
einen Getrieberadsatz (10a), der zur Einstellung von zumindest zwei Getriebegängen (V1a, V2a, V3a, V4a, V5a, V6a, V7a, V8a, V9a, Ra) vorgesehen ist, wobei in zumindest einem der Getriebegänge (V1a, V2a, V3a, Ra) zumindest die Formschlusseinheit (16a) geschlossen ist und in zumindest einem anderen der Getriebegänge (V4) lediglich die Reibschlusseinheit (15a) geschlossen ist.

## Claims

1. Transmission device for a motor vehicle, having at least one coupling unit (S5a) comprising a friction-locking unit (15a) and a positive-locking unit (16a) connected in parallel with the friction-locking unit (15a) in the flow of force, having an actuator (22a) provided to actuate the friction-locking unit (15a) in a first actuating state and at least the positive-locking unit (16a) in a second actuating state, and having a counterpressure unit (28a) provided to make available a counterforce acting against the actuator (22a) in at least one operating state,
wherein the counterpressure unit (28a) is provided to alter the counterforce during an operation,
**characterised in that**
the counterpressure unit (28a) is of a hydraulic or pneumatic design.

2. Transmission device according to claim 1,
**characterised in that**
the friction-locking unit (15a) has at least one axially displaceable friction element (18'a) and the counterpressure unit (28a) has at least one counterpressure piston (31a) provided to support the at least one friction element (18'a) axially with the counterforce in at least one operating state.

3. Transmission device according to any of the preceding claims.
**characterised in that**
the positive-locking unit (16a; 16b) has an axially displaceable positive-locking element (19a; 20b) and the counterpressure unit (28a) or a return spring of the actuator (22b) is provided to act on the positive-locking element (19a; 20b) in the opening direction (35a; 35b).

4. Transmission device according to any of the preceding claims.
**characterised in that**
the actuator (22b) and the counterpressure unit (28a) each has a pressure area (27a, 34a), the pressure area (27a) of the actuator (22b) being larger than the pressure area (34a) of the counterpressure unit (28a).

5. Transmission device according to any of the preceding claims.
**characterised by**
an operating medium pressure system (29a), wherein the counterpressure unit (28a) has a pressure chamber (33a) connected to the operating medium pressure system (29a) in terms of pressure technology in at least one operating state.

6. Transmission device according to claim 5,
**characterised in that**
the pressure chamber (33a) is permanently connected to the operating medium pressure system (29a) in terms of pressure technology

7. Transmission device according to claim 5 or 6,
**characterised in that**
the operating medium pressure system (29a) is designed as an operating pressure system

8. Transmission device according to any of the preceding claims.
**characterised in that**
the friction-locking unit (15a) has a design moment which is lower than an overall design moment of the coupling unit (S5a).

9. Transmission device according to any of the preceding claims.
**characterised by**
a gear set (10a) provided to set at least two gears (V1a, V2a, V3a, V4a, V5a, V6a, V7a, V8a, V9a, Ra), wherein at least the positive-locking unit (16a) is closed in at least one of the gears (V1a, V2a, V3a, Ra) and only the friction-locking unit (15a) is closed in at least one other of the gears (V4).

## Revendications

1. Dispositif de transmission pour un véhicule automobile, comprenant au moins une unité d'accouplement (S5a), qui comprend une unité de liaison par friction (15a) et une unité de liaison par complémentarité de forme (16a) montée en parallèle avec l'unité de liaison par friction (15a) dans le flux de forces, comprenant un actionneur (22a) qui sert à actionner l'unité de liaison par friction (15a) dans un premier état d'actionnement et sert à actionner au moins l'unité de liaison par complémentarité de forme (16a) dans un second état d'actionnement, et comprenant une unité de contre-pression (28a) qui permet d'obtenir dans au moins un état de fonctionnement une force de réaction agissant contre l'actionneur (22a),
dans lequel l'unité de contre-pression (28a) sert à modifier la force de réaction pendant un fonctionnement,
**caractérisé en ce que**
l'unité de contre-pression (28a) est conçu hydrauliquement ou pneumatiquement.

2. Dispositif de transmission selon la revendication 1,
**caractérisé en ce que**
l'unité de liaison par friction (15a) présente au moins un élément de liaison par friction (18'a) pouvant se déplacer axialement et l'unité de contre-pression (28a) présente au moins un piston de contre-pression (31a) qui sert à appuyer axialement dans au moins un état de fonctionnement l'au moins un élément de liaison par friction (18'a) au moyen de la force de réaction.

3. Dispositif de transmission selon l'une quelconque des revendications précédentes,
**caractérisé en ce que**
l'unité de liaison par complémentarité de forme (16a, 16b) présente un élément de liaison par complémentarité de forme pouvant se déplacer axialement (19a, 20b) et l'unité de contre-pression (28a) ou un ressort de rappel de l'actionneur (22b) sert à agir dans la direction d'ouverture (35a, 35b) sur l'élément de liaison par complémentarité de forme (19a, 20b).

4. Dispositif de transmission selon l'une quelconque des revendications précédentes,
**caractérisé en ce que**
l'actionneur (22a) et l'unité de contre-pression (28a) présentent respectivement une surface de pression (27a, 34a), la surface de pression (27a) de l'actionneur (22a) étant supérieure à la surface de pression (34a) de l'unité de contre-pression (28a).

5. Dispositif de transmission selon l'une quelconque des revendications précédentes,
**caractérisé par**
un système de pression d'équipement (29a), l'unité de contre-pression (28a) présentant une chambre de pression (33a) qui dans au moins un état de fonctionnement est reliée par une technique sous pression au système de pression de moyen d'équipement (29a).

6. Dispositif de transmission selon la revendication 5,
**caractérisé en ce que**
la chambre de pression (33a) est reliée par une technique sous pression en permanence au système de pression de moyen d'équipement (29a).

7. Dispositif de transmission selon la revendication 5 ou 6,
**caractérisé en ce que**
le système de pression d'équipement (29a) est conçu sous la forme d'un système de pression de travail.

8. Dispositif de transmission selon l'une quelconque des revendications précédentes,
**caractérisé en ce que**
l'unité de liaison par friction (15a) présente un couple prévu par le constructeur qui est inférieur au couple total prévu par le constructeur de l'unité d'accouplement (S5a).

9. Dispositif de transmission selon l'une quelconque des revendications précédentes,
**caractérisé par**
un jeu de roues de transmission (10a) qui sert au réglage d'au moins deux rapports de transmission (V1a, V2a, V3a, V4a, V5a, V6a, V7a, V8a, V9a, Ra) est prévu, dans lequel dans au moins l'un des rapports de transmission (V1a, V2a, V3a, Ra) au moins l'unité de liaison par complémentarité de forme (16a) est fermé et dans au moins un autre rapport de transmission parmi les rapports de transmission (V4) seule l'unité de liaison par friction (15a) est fermée.
